# EUROPEAN PATENT APPLICATION

(11) **EP 3 733 026 A1**
(43) Date of publication of application: **04.11.2020**
(21) Application number: 19172191.9
(22) Date of filing: 02.05.2019
(51) Int. Cl.: A47J 27/00, A47J 43/04, A47J 43/046

(54) **SUGAR REDUCTION OF FOOD PRODUCTS**

(71) Applicant: Koninklijke Philips N.V., 5656 AG Eindhoven (NL)
(72) Inventor: DE VREEDE, Jasper, 5656 AE Eindhoven (NL); CHEN, Yun, 5656 AE Eindhoven (NL); WIJNOLTZ, Anna Louise, 5656 AE Eindhoven (NL)
(74) Representative: de Haan, Poul Erik

(57) **Abstract**

A food processing apparatus (10) is disclosed for reducing a sugar content of a food product. The food processing apparatus comprises a food processing compartment (30) including a blade arrangement (32); a base (20) including a motor (22) arranged to drive the blade arrangement; a heating arrangement (24) for heating a food product in the food processing compartment; and a controller (60) arranged to control the motor and the heating arrangement. The controller is arranged to, in a fermentation mode of operation of said food processing apparatus, operate the motor to grind the food product with the blade arrangement; operate the heating arrangement such as to heat the ground food product to a temperature in a range of 30-40°C; and terminate said mode of operation after a period of time indicative of the completion of said mode of operation. Also disclosed is a method of reducing the sugar content of a food product with such a food processing apparatus.

## Description

### FIELD OF THE INVENTION

The present invention relates to a food processing apparatus comprising a food processing compartment including a blade arrangement; a base including a motor arranged to drive the blade arrangement; a heating arrangement for heating a food product in the food processing compartment; and a controller arranged to control the motor.

The present invention further relates to a method of operating such a food processing apparatus.

### BACKGROUND OF THE INVENTION

In order for a person to follow a healthy diet, a balanced intake of the various essential nutrients making up such a diet is typically required whilst not exceeding recommended daily calorie targets. Indeed, in many developed countries, healthcare problems have become commonplace due to people following unhealthy diets in which too many fats, sugars and/or calories are being consumed on a regular basis. This can lead to chronic and potentially life-threatening conditions such as obesity and type 2 diabetes for example.

For this reason, vegetable and in particular fruit-based processed food products such as vegetable and/or fruit-based juices or smoothies have become increasingly popular, due to the perceived health benefits of such food products. Indeed, many vegetables and fruits contain many useful nutrients such as vitamins, fibers and carbohydrates such as monosaccharides and other sugars. However, the consumption of such food products can also lead to imbalances in a person's diet. For example, such food products can be high in calories, for example due to the sugars therein, which can lead to its consumers not consuming enough other types of essential nutrients, e.g. (unsaturated) fats and proteins. In addition, the high concentration of sugars in such drinks can lead to health issues such as obesity and caries.

It is known per se to treat food products with heat, for instance in order to change their composition. However, many of such processes are applied on an industrial scale, and their deployment in a domestic setting, such as in a kitchen appliance, is far from trivial. An example of such a domestic process and apparatus is disclosed in WO 2013/035029 A1, which discloses a method and device of preparing puree including providing pieces of raw material in a blending unit; heating the pieces of raw material and blending the pieces of raw material when the pieces of raw material have been heated to a first temperature (a reversible deactivation temperature of enzymes in fruit and vegetables), wherein during the blending step, the heating step is controlled such that the temperature of the pieces of raw material being blended is between the first temperature and a second temperature (an irreversible deactivation temperature of enzymes in fruit and vegetables), the second temperature being higher than the first temperature. The deactivation of the enzymes by blending the fruit or vegetables at elevated temperatures ensures that important nutrients such as vitamin C and polyphenols are not decomposed by such enzymes during the blending process. Moreover, the reversible deactivation of the enzymes at temperatures typically ranging from 50-60°C and subsequent heating of the fruit or vegetables to 70-80°C or higher during the blending process also prevents unwanted thermal decomposition of such nutrients. However, such a method and device does not significantly reduce the sugar content of the fruit and vegetables processed in accordance therewith.

### SUMMARY OF THE INVENTION

The present invention seeks to provide a food processing apparatus that is operable to reduce the sugar content in food products processed therein.

The present invention further seeks to provide a method of reducing the sugar content of food products with such a food processing apparatus.

According to an aspect, there is provided a food processing apparatus for reducing a sugar content of a food product, the food processing apparatus comprising a food processing compartment including a blade arrangement; a base including a motor arranged to drive the blade arrangement; a heating arrangement for heating a food product in the food processing compartment; and a controller arranged to control the motor and the heating arrangement; wherein the controller is arranged to, in a mode of operation of said food processing apparatus, operate the motor to grind the food product with the blade arrangement; operate the heating arrangement such as to heat the ground food product to a temperature in a range of 30-40°C; and terminate said mode of operation after a period of time indicative of the completion of said mode of operation.

The food processing apparatus according to embodiments of the present invention facilitates the implementation of food products processed in the apparatus by providing a fermentation mode of operation during which the temperature in the food processing compartment is controlled such that fermentation conditions of the food product are optimized. This is achieved by first grinding the food product into smaller pieces with the blade arrangement in order to release sugars from the food product and increase its surface area, after which temperature control ensures optimal conditions for the fermentation of the food product. In an example embodiment, the controller is adapted to control the temperature in the food processing compartment during the heating process to a temperature of 35°C for this reason. In the context of the present application, where reference is made to grinding a food product, it should be understood that this simply refers to blending, cutting or dicing the food product with the blade arrangement, such that this term should not be interpreted as referring to processing food products with a particular hardness.

For the avoidance of doubt it is further noted that in order to achieve such fermentation, the user is expected to add a fermentation starter to the food processing compartment together with the food product. Examples of such a starter include yoghurts with live cultures, whey, an isolated live culture, and so on. Generally speaking, a fermentation starter may be any product containing live bacteria that may be added to the food product such that (free) sugars of the food product are at least partially consumed by the live bacteria during fermentation of the food product. Consequently, during the fermentation process sugar of product are consumed by the fermentation starter, thereby reducing the sugar content of the food product and increasing the amount of good bacteria (probiotics) in the food product. This is particularly advantageous when the food product is a type of fruit or vegetable that contains sugars.

In an embodiment, the controller is further adapted to operate the motor at set time intervals during said heating to periodically stir the ground food product, optionally wherein said set time interval is in a range of 5-15 minutes, and/or the controller is arranged to operate the motor for a duration in a range of 1-10 seconds at said set time intervals. By periodically stirring the fermenting food product during the fermentation process the homogeneity of the food product is improved and the release of fermentation gases from the fermenting food product is promoted, thereby further improving the efficiency of the fermentation process.

The food processing apparatus may further comprise a lid including a pressure release valve for hermetically sealing the food processing compartment. The hermetic seal ensures that the fermentation process can effectively proceed, whereas the pressure release valve ensures that the build-up of excess pressure within the food processing compartment due to the release of gases such as CO₂ during the fermentation process is avoided, thereby increasing the safety of such a food processing apparatus.

The food processing apparatus may further comprise a temperature sensor thermally coupled to said food processing compartment and communicatively coupled to the controller, wherein the controller is adapted to control said heating arrangement in response to temperature data provided by said temperature sensor. In this manner, the temperature within the food processing compartment can be accurately controlled by the controller, which further benefits the efficiency of the fermentation process.

In an embodiment, the food processing apparatus further comprises a pressure sensor communicatively coupled to the controller, wherein the controller is adapted to determine the completion of said mode of operation based on pressure data provided by said pressure sensor. By monitoring the volume of gases that is released from the food product during the fermentation process with the pressure sensor, the controller can determine when the fermentation process is likely to be complete, in particular when the controller is aware of the amount of the food product within the food processing compartment. This is advantageous compared to using a fixed or defined duration of the fermentation mode of operation because the sugar content of a particular type of food product may vary such that dynamically monitoring the progress of the fermentation process with the pressure sensor may provide more accurate control of the total reduction of the sugar content of the food product. The pressure sensor may be integrated in the pressure release valve in order to provide a particularly compact arrangement.

In a preferred embodiment, the food processing apparatus further comprises a user interface communicatively coupled to the controller for selecting said mode of operation. Such a user interface may be used to select the fermentation mode of operation of the food processing apparatus. Furthermore, the user interface may further comprise a fermentation recipe selection function, wherein the controller is adapted to select at least one of said temperature, said time interval and said period of time in response to a fermentation recipe selected with said user interface. Such a fermentation recipe selection function for example may specify different types of food products such that the controller may select optimized fermentation conditions for each type of food product that can be selected with the user interface.

The food processing apparatus may further comprise a sensory output device responsive to the controller, wherein the controller is adapted to generate a sensory output with the sensory output device upon termination of said mode of operation. Such a sensory output may be used to signal to the user that the fermentation process of the food product inserted into the food processing apparatus by the user has completed.

The food processing apparatus according to embodiments of the present invention may take any suitable shape or form. For example, the food processing apparatus may be a domestic or commercial kitchen appliance such as a blender or juicer.

According to another aspect, there is provided a method of reducing a sugar content of a food product with a food processing apparatus comprising a food processing compartment including a blade arrangement; a base including a motor arranged to drive the blade arrangement; a heating arrangement for heating a food product in the food processing compartment; and a controller arranged to control the motor and the heating arrangement, the method comprising;
receiving the food product including a fermentation starter in the food processing compartment;
receiving a food product fermentation instruction with the controller, and in response to receiving said food product fermentation instruction, operating the motor with the controller to grind the food product with the blade arrangement; operating the heating arrangement with the controller such as to heat the ground food product to a temperature in a range of 30-40°C; and terminating said mode of operation with the controller after a period of time indicative of the completion of said mode of operation. With the method of the present invention, the sugar content of a food product may be reduced through fermentation, which may further increase the amount of good bacteria (probiotics) in the food product. Therefore, a food product prepared with the food processing apparatus in accordance with this preparation method has increased health benefits not only because of reduced sugar content but also because of increased amounts of good bacteria in the processed food product.

In an embodiment, the method further comprises operating the motor with the controller at set time intervals during said heating to periodically stir the ground food product. By periodically stirring the fermenting food product, the efficiency of the fermentation process is improved.

The food processing apparatus may further comprise a lid including a pressure release valve for hermetically sealing the food processing compartment, such that the method may further comprise hermetically sealing the food processing compartment with said lid upon receiving said food product with the fermentation starter in the food processing compartment; and

periodically releasing gases generated in the food processing compartment during said mode of operation with the pressure release valve. The hermetic seal ensures beneficial fermentation conditions within the food processing compartment whereas the release of pressure from the food processing compartment prevents this pressure from reaching dangerous values, e.g. values at which the food processing compartment may fail.

The food processing apparatus may further comprise a pressure sensor communicatively coupled to the controller, the method further comprising determining the completion of said mode of operation with the controller based on pressure data provided by said pressure sensor. In this manner, the completion of the fermentation process may be accurately controlled.

Preferably, the controller is responsive to a user interface communicatively coupled to the controller for selecting said mode of operation, said user interface comprising a fermentation recipe selection function, the method further comprising selecting at least one of said temperature, said time interval and said period of time with the controller in response to a fermentation recipe selected with said user interface. This allows for the optimal fermentation of a particular type of food product by using one or more fermentation process parameters that have been optimized for that particular type of food product. It is noted that the user interface communicatively coupled to the food processing apparatus may form an integral part of the food processing apparatus or alternatively may be comprised by a separate device in communication with the food processing apparatus, such as a mobile communication device such as a smart phone, tablet computer, a remote controller or the like.

### BRIEF DESCRIPTION OF THE DRAWINGS

Embodiments of the invention are described in more detail and by way of non-limiting examples with reference to the accompanying drawings, wherein:
FIG. 1 schematically depicts a cross-sectional view of a food processing apparatus according to an embodiment;
FIG. 2 schematically depicts a cross-sectional view of a food processing apparatus according to another embodiment;
FIG. 3 schematically depicts a cross-sectional view of a food processing apparatus according to yet another embodiment; and
FIG. 4 is a flowchart of an embodiment of a method of reducing the sugar content of food product with such a food processing apparatus.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

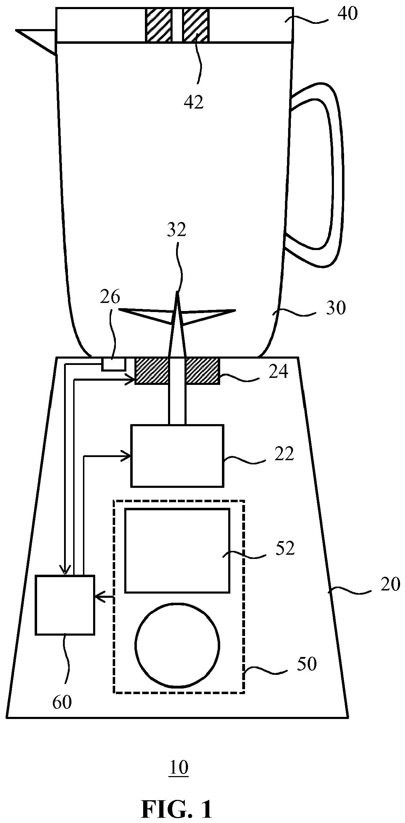

Embodiments of the present invention provide a food processing apparatus that is configured to reduce the (free) sugar contents of (raw) food products such as vegetables and fruits, most notably fruits as the sugar contents of most fruits is higher than the sugar contents of vegetables. The food processing apparatus in typical embodiments is a kitchen appliance for use in a domestic or commercial kitchen, such as a blender, juicer or the like. FIG. 1 schematically depicts a cross-sectional view of a food processing apparatus 10 according to an embodiment of the present invention. The food processing apparatus 10 comprises a food processing compartment 30, which typically comprises a blade arrangement 32 to grind, macerate or otherwise cut or blend food products. The blade arrangement 32 may be detachable from the food processing compartment 30, e.g. in order to facilitate cleaning of the blade arrangement 32. The food processing compartment 30 may take any suitable form, such as for example a glass or plastic jug or bowl that may be hermetically sealed by a lid 40. A pressure release valve 42 maybe located in the lid 40, which is in fluid communication with the food processing compartment 30 and is arranged to expel gases from the food processing compartment 30 through the lid 40 upon the pressure in the food processing compartment 30 reaching a critical value. This ensures that when gases build up within the food processing compartment 30 during fermentation of the food product therein, the pressure caused by this build up cannot reach dangerous values, e.g. values at which the lid 40 maybe forced off the food processing compartment 30 or at which the food processing compartment 30 may break or shatter. The pressure release valve 42 may be realized in any suitable manner. As such pressure release valves are well-known per se, this will not be discussed in further detail for the sake of brevity only.

The blade arrangement 32 is driven by a motor 22 under control of a controller 60, which may be housed in a base 20 of the food processing apparatus 10. The motor 22 may be coupled to the blade arrangement in any suitable manner, e.g. through a drive axle or shaft, gear box and so on. Such types of couplings are well-known per se and are therefore not explained in further detail for the sake of brevity only. The controller 60 may be any suitable control arrangement comprising one or more physical entities implementing such a control arrangement.
The food processing apparatus 10 further comprises a heating element 24 responsive to the controller 60. The heating element 24 maybe arranged in any suitable location as long as the heating element 24 is thermally coupled to the food processing compartment 30. For example, the heating element 24 may be arranged in the base 20. The heating element 24 typically is arranged to heat the contents, i.e. the food product, in the food processing compartment 30 to a set temperature. As will be explained in further detail below, such a heating step of the food product in the food processing compartment 30, when performed under specific conditions, can be used to reduce the sugar content of the food product in the food processing compartment 30. The heating arrangement 24 may take any suitable form, such as a microwave, an inductive heater or a (resistive) heating element, and so on. The food processing apparatus 10 may further comprise a temperature sensor 26 in thermal contact with the food processing chamber 30 to sense the temperature within the food processing chamber 30. The temperature sensor 26 is communicatively coupled to the controller 60 such that the controller 60 can operate the heating arrangement 24 in response to temperature data provided by the temperature sensor 26 in order to accurately control the temperature within the food processing compartment 30 during a fermentation mode of operation of the food processing apparatus as will be explained in more detail below. Any suitable type of temperature sensor 26 may be used for this purpose.

The controller 60 may be responsive to a user interface 50 through which the food processing apparatus 10 may be controlled, e.g. by a user selecting the mode of operation in which the food product within the food processing compartment 30 is to be fermented. Such a user interface 50 may form part of the food processing apparatus 10, in which case the user interface 50 may be implemented in any suitable manner, e.g. as a touchscreen display, one or more switches, buttons, knobs or dials, and so on, or any combination of such user interface elements. The user interface 50 for example may be located on the base 20 of the food processing apparatus 10 or in any other suitable location thereon. The food processing apparatus 10 may further comprise a sensory output device 52 responsive to the controller 50 through which the controller 50 may cause the generation of a sensory output, e.g. an audible or visible output, for example to signal the completion of the fermentation of the food product in the food processing compartment 30. Such a sensory output device 52 may take any suitable shape, e.g. a speaker, one or more lights such as LEDs, a display, and so on. The sensory output device 52 may form part of the user interface 50 although this is not necessarily the case.

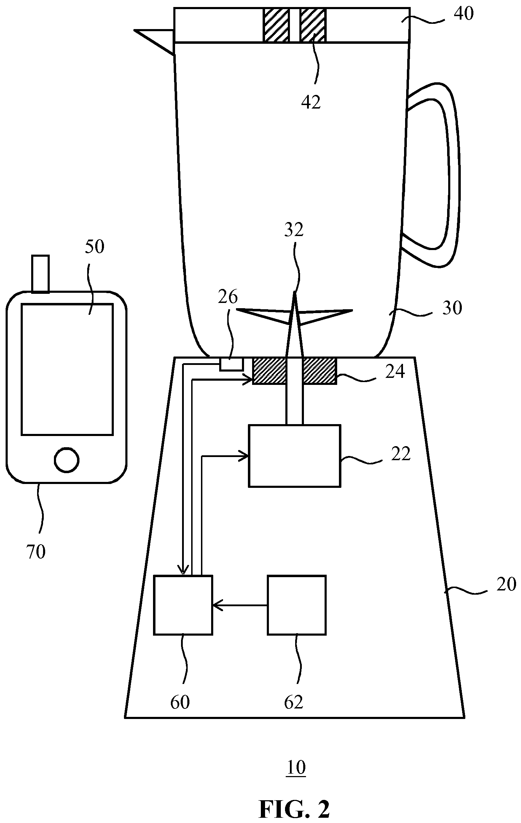

Alternatively, as schematically depicted in FIG. 2, the user interface 50 may be implemented on a remote device 70, e.g. by way of a software program such as an app, through which the food processing apparatus 10 may be remotely controlled. For example, such a remote device 70 maybe a computing device, a mobile communication device such as a smart phone, a tablet computer, a remote controller, and so on. In embodiments in which the user interface 50 is implemented on such a remote device, the food processing apparatus 10 typically further comprises a communication module 62 communicatively coupled to the controller 60, preferably a wireless communication module through which the remote device may communicate with the food processing apparatus 10. Such a communication link may be a direct (P2P) link such as a Bluetooth link or the like, or may be an indirect link running through a communication management device such as a server, router or the like. As the technology involved with such communication links is well-known per se, this will not be explained in further detail for the sake of brevity only.

The user interface 50, whether forming part of the food processing apparatus 10 or the remote device 70, may be configured to allow a user to select a fermentation recipe, e.g. for a particular type of food product. Such a fermentation recipe selection menu for example may allow a user to select the type of food product that is to be fermented, e.g. a particular type of fruit or vegetable, or may allow a user to select a particular fermentation starter to be used, a recipe associated with a particular fermentation starter to be used and so on. Based on such a user selection, the controller 50 may select one or more of the fermentation process parameters such as fermentation temperature, total duration of the fermentation process, a time interval between consecutive stirring operations of the ground food product during the fermentation process, and so on. Such operating parameters may be stored in a data storage device (not shown) forming part of or being accessible to the controller 50, such as in the form of a look up table or the like. Such operating parameters may be pre-programmed into the food processing apparatus 10. Alternatively or additionally, such operating parameters may be programmed into the data storage device by the user, e.g. using the user interface 50, e.g. by a user adding his or her own fermentation recipes to the fermentation recipe selection function of the user interface 50.

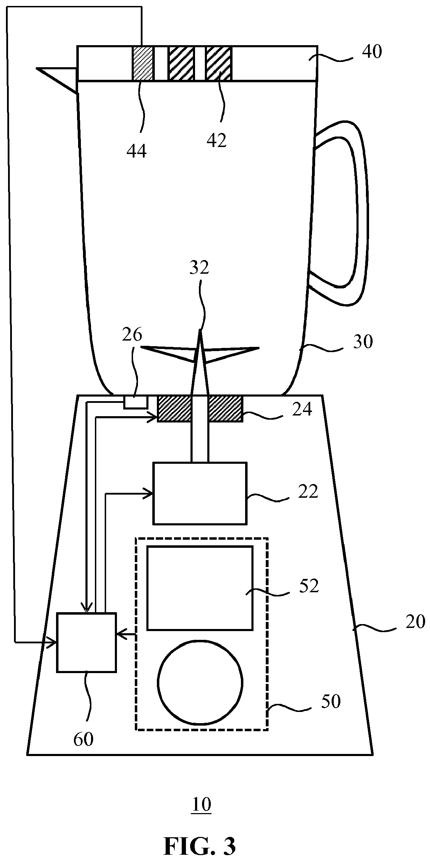

Fig. 3 schematically depicts a cross-sectional view of a food processing apparatus 10 according to yet another embodiment. In this embodiment, the food processing apparatus 10 further comprises a pressure sensor 44 for sensing the pressure in the food processing compartment 30. Such a pressure sensor 44 may be housed in the lid 40 sealing the food processing compartment 30. For example, the pressure sensor 44 may be integrated within the pressure release valve 42 in order to provide a particularly compact arrangement. The pressure sensor 44 may take any suitable shape. The controller 60 in this embodiment is communicatively coupled to the pressure sensor 44, e.g. through a wireless communication link. The pressure sensor 44 is arranged to measure the pressure within the food processing compartment 30 and to periodically relay the pressure data to the controller 60. In this manner, the processor 60 can keep track of the amount of gases that have been generated within the food processing compartment 30 as the controller 60 typically will have knowledge of the total volume of the food processing compartment 30 as well as of the critical pressure value at which the pressure release valve 42 releases gases from the food processing compartment 30. Hence, by keeping track of the pressure profile within the food processing compartment 30 over time, the controller 60 can calculate the total volume of gases that has been released from the food product (and the food processing compartment 30) during the fermentation process. This information may be used by the controller 60 to determine when the fermentation process of the food product in the food processing compartment 30 is to be terminated. For example, if the fermentation process targets the reduction in the sugar content of the food product by an absolute amount, the total volume of gases from the food product during the fermentation process is directly related to this absolute amount, such that the controller 60 can use the pressure data provided by the pressure sensor 44 as an accurate indicator of when to terminate the fermentation process. Alternatively, a user of the food processing apparatus 10 may specify the weight of the food product added to the food processing compartment 30 such that the controller 60 may calculate the termination point of the fermentation process from the pressure data provided by the pressure sensor 44 based on a typical sugar content of the food product, its specified weight and a target reduction of this sugar content. The food processing apparatus 10 may also comprise a weight sensor (not shown) arranged to weigh the contents of the food processing compartment 30, such that the controller 60 does not need to rely on a user specifying the weight of the food product added to the food processing compartment 30 by instead may obtain this weight using such a weight sensor.

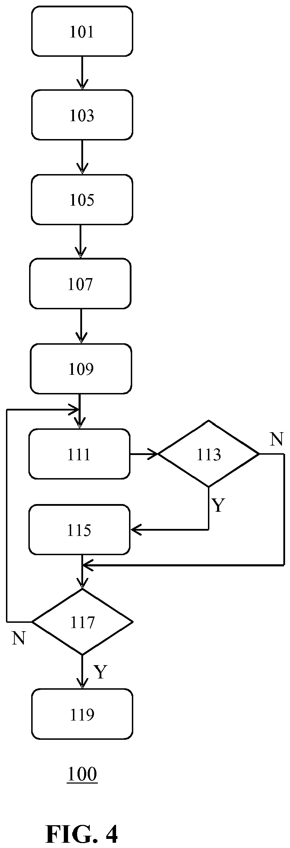

Next, the method 100 of operation of the food processing apparatus 10 according to embodiments of the present invention will be explained in further detail with the aid of FIG. 4, which depicts a flowchart of an example embodiment of the method 100. The method 100 starts in operation 101 in which the user of the food processing apparatus for instance removes the lid 40 from the food processing compartment 30 to gain access to this compartment. In operation 103, the food processing compartment 30 of the food processing apparatus 10 receives the food product including the fermentation starter, i.e. an additive containing live bacteria, from the user and the controller 60 in operation 105 receives a fermentation program selection from the user interface 50. This fermentation program selection may include the selection of a fermentation recipe by the user as previously explained. In response, the controller 60 initiates the fermentation mode of operation of the food processing apparatus 10 in operation 107. This for example may include the controller 60 operating the sensory output device 52 and/for the user interface 50 to display an indication, e.g. switch on a light such as a LED, indicating that the fermentation mode of operation of the food processing apparatus 10 has been engaged.

In operation 109, the controller 60 controls the motor 22 to engage the blade arrangement 32 in the food processing compartment 30 for a defined period of time, such as a set period of time or a period of time that is a function of the total weight of the food product in the food processing compartment 30. This period of time further may be selected by the controller 60 based on a fermentation recipe selection by the user in operation 105 as previously explained. Operation 109 is typically for the purpose of grinding the food product, e.g. blending, dicing, cutting the food product and so on, in order to release sugars from the food product and increase the total surface area of the food product. During this operation, the blade arrangement 32 maybe operated at a relatively high speed, i.e. a typical rotation speed for such an operation as such rotation speeds are well-known per se, this will not be further elaborated upon for the sake of brevity only.

Upon completion of operation 109, the method 100 proceeds to operation 111 in which the controller 60 operates the heating arrangement 24 such as to heat the food product in the food processing compartment 30 to a temperature of 30-40°C, e.g. 35°C. The actual temperature to which the food product in the food processing compartment 30 is heated may be a fixed temperature or may be user-selected, e.g. by the selection of a fermentation recipe for the food product with the user interface 50 in operation 105 as previously explained. The controller 60 may be responsive to the temperature sensor 26 to ensure that the heating arrangement 24 is operated such that the temperature within the food processing compartment 30 does not significantly deviate from its desired value. The temperature range of 30-40°C is chosen to optimize the fermentation of the food product in the presence of the fermentation starter. If the temperature of this fermentation process is below 30°C, the fermentation rate of the food product becomes rather low such that the effective fermentation food product would take an excessive amount of time. On the other hand, if the temperature of this fermentation process is above 40°C, the live fermentation cultures may perish. As previously explained, the actual temperature at which the fermentation process is performed may be a function of the actual fermentation starter used, which may be selected with the user interface 50 as previously explained.

Optionally, the controller 60 may be periodically engage the motor 22 during the heating process of operation 111 such as to stir the fermenting food product with the blade arrangement 32. In such an embodiment, the controller 60 may comprise a timer, which checks in operation 113 if a defined time interval from the start of the heating process or from the previous stirring operation has lapsed. If this time interval has lapsed, the controller 60 operates the motor 22 in operation 115 for a short period of time, e.g. 1-10s, such as to stir the food product in the food processing compartment 30. Such stirring improve the homogeneity of the fermenting food product as well as persistent the release of fermentation gases from the fermenting food product. During such a stirring operation, the motor 22 typically operates the blade arrangement 32 at a relatively low rotation speed, e.g. a few hundred RPM or less such as not to disturb the fermentation process too much. The time interval between successive stirring events may be set to any suitable value, such as 5-15 minutes, e.g. 10 minutes. Other values of course may be contemplated, although when such a value is chosen outside the preferred range the efficiency of the fermentation process of the food product may be compromised.

On the other hand, if the controller 60 determines in operation 113 that no such mixing of the food product is required, e.g. because the set time interval has not yet lapsed, the method 100 proceeds to operation 117 in which the controller 60 checks whether the fermentation mode of operation of the food processing apparatus 10 has been completed. For example, the completion of this mode of operation may be signaled by a defined amount of time for this mode of operation having lapsed or by the pressure data obtained from the pressure sensor 44 indicating the completion of this mode of operation as previously explained. In case of the controller 60 timing the completion of the fermentation process based on a defined period of time, it will be understood from the foregoing that is defined period of time may be independent of food product and fermentation starter type, or alternatively may be a function of the food product type and/or fermentation starter type as specified by a user through the user interface 50, e.g. using the fermentation recipe selection function of the user interface 50 as previously explained. If the controller 60 decides in operation 117 that the fermentation process of the food product in the food processing compartment 30 is not yet been completed, the controller 60 reverts back to previously described operation 111 and continues to operate the heating arrangement 24 in order to maintain the temperature in the food processing compartment 30 at a temperature in a range of 30-40°C. On the other hand, if the controller 60 decides in operation 117 that the fermentation of the food product has been completed, the method 100 proceeds to operation 119 in which the controller 60 terminates the fermentation mode of operation of the food processing apparatus 10. To signal the termination of this mode of operation, the controller 60 may operate the sensory output device 52 in order to generate a sensory output indicative of the termination of this mode of operation such that the user of the food processing apparatus 10 is informed that the processing of the food product in the food processing apparatus 10 is complete. The controller 60 may further automatically power down the food processing apparatus 10 upon completion of the fermentation mode of operation, e.g. immediately thereafter or after a defined period of time following the completion of this operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A food processing apparatus (10) for reducing a sugar content of a food product, the food processing apparatus comprising:
a food processing compartment (30) including a blade arrangement (32);
a base (20) including a motor (22) arranged to drive the blade arrangement;
a heating arrangement (24) for heating a food product in the food processing compartment; and
a controller (60) arranged to control the motor and the heating arrangement;
wherein the controller is arranged to, in a mode of operation of said food processing apparatus:
operate the motor to grind the food product with the blade arrangement;
operate the heating arrangement such as to heat the ground food product to a temperature in a range of 30-40°C; and
terminate said mode of operation after a period of time indicative of the completion of said mode of operation.

2. The food processing apparatus (10) of claim 1, wherein the controller is further adapted to operate the motor at set time intervals during said heating to periodically stir the ground food product, optionally wherein:
said set time interval is in a range of 5-15 minutes, and/or
the controller (60) is arranged to operate the motor (22) for a duration in a range of 1-10 seconds at said set time intervals.

3. The food processing apparatus (10) of claim 1 or 2, further comprising a lid (40) including a pressure release valve (42) for hermetically sealing the food processing compartment.

4. The food processing apparatus (10) of any of claims 1-3, further comprising a temperature sensor (26) thermally coupled to said food processing compartment (30) and communicatively coupled to the controller (60), wherein the controller is adapted to control said heating arrangement (24) in response to temperature data provided by said temperature sensor.

5. The food processing apparatus (10) of any of claims 1-4, further comprising a pressure sensor (44) communicatively coupled to the controller (60), wherein the controller is adapted to determine the completion of said mode of operation based on pressure data provided by said pressure sensor.

6. The food processing apparatus (10) of claim 5, wherein the pressure sensor (44) is integrated in said pressure release valve (42).

7. The food processing apparatus (10) of any of claims 1-6, further comprising a user interface (50) communicatively coupled to the controller (60) for selecting said mode of operation.

8. The food processing apparatus (10) of claim 7, wherein the user interface (50) further comprises a fermentation recipe selection function, and wherein the controller (60) is adapted to select at least one of said temperature, said time interval and said period of time in response to a fermentation recipe selected with said user interface.

9. The food processing apparatus (10) of any of claims 1-8, further comprising a sensory output device (52) responsive to the controller (60), and wherein the controller is adapted to generate a sensory output with the sensory output device upon termination of said mode of operation.

10. The food processing apparatus (10) of any of claims 1-9, wherein the food processing apparatus is a blender or juicer.

11. A method (100) of reducing a sugar content of a food product with a food processing apparatus (10) comprising:
a food processing compartment (30) including a blade arrangement (32);
a base (20) including a motor (22) arranged to drive the blade arrangement;
a heating arrangement (24) for heating a food product in the food processing compartment; and
a controller (60) arranged to control the motor and the heating arrangement,
the method comprising:
receiving (103) the food product including a fermentation starter in the food processing compartment;
receiving (105) a food product fermentation instruction with the controller, and in response to receiving said food product fermentation instruction:
operating (109) the motor with the controller to grind the food product with the blade arrangement;
operating (111) the heating arrangement with the controller such as to heat the ground food product to a temperature in a range of 30-40°C; and
terminating (119) said mode of operation with the controller after a period of time indicative of the completion of said mode of operation.

12. The method of claim 11, further comprising operating (115) the motor with the controller at set time intervals during said heating to periodically stir the ground food product.

13. The method (100) of claim 11 or 12, wherein the food processing apparatus further comprises a lid (40) including a pressure release valve (42) for hermetically sealing the food processing compartment (30), the method further comprising:
hermetically sealing the food processing compartment with said lid upon receiving (103) said food product with the fermentation starter in the food processing compartment; and
periodically releasing gases generated in the food processing compartment during said mode of operation with the pressure release valve.

14. The method (100) of any of claims 11-13, wherein the food processing apparatus (10) further comprises a pressure sensor (44) communicatively coupled to the controller (60), the method further comprising determining (117) the completion of said mode of operation with the controller based on pressure data provided by said pressure sensor.

15. The method (100) of any of claims 11-14, wherein the controller (60) is responsive to a user interface (50) communicatively coupled to the controller for selecting said mode of operation, said user interface comprising a fermentation recipe selection function, the method further comprising selecting (107) at least one of said temperature, said time interval and said period of time with the controller in response to a fermentation recipe selected with said user interface.
